# EUROPEAN PATENT SPECIFICATION

(11) **EP 3 998 210 B1**
(45) Date of publication and mention of the grant of the patent: **13.09.2023**
(21) Application number: 21158207.7
(22) Date of filing: 19.02.2021
(51) Int. Cl.: B64D 13/00, F16K 1/36, F16K 1/42, F16K 31/10, F16K 31/06, F24F 13/10

(54) **VALVE APPARATUS FOR CONTROLLING A FLUID FLOW THROUGH A DUCT OR OPENING OF AN AIR CONDITIONING SYSTEM OF AN AIRCRAFT**
VENTILVORRICHTUNG ZUR STEUERUNG EINES FLUIDSTROMS DURCH EINEN KANAL ODER EINE ÖFFNUNG EINER KLIMAANLAGE EINES FLUGZEUGES
APPAREIL À SOUPAPE POUR RÉGULER UN FLUX DE FLUIDE À TRAVERS UN CONDUIT OU UNE OUVERTURE D'UN SYSTÈME DE CONDITIONNEMENT D'AIR D'UN AÉRONEF

(43) Date of publication of application: 18.05.2022
(73) Proprietor: Lilium eAircraft GmbH, 82234 Wessling (DE)
(72) Inventor: GAILE, Alfred, 88299 Leutkirch (DE); DIETRICH, Axel, 82205 Gilching (DE)
(74) Representative: Weickmann & Weickmann PartmbB

(56) References cited:
- CN-A- 108 386 585
- DE-A1- 2 315 626
- DE-A1- 4 438 250
- DE-A1-102014 204 160
- DE-B4- 10 162 604
- JP-U- S4 992 048
- US-A- 4 557 185

## Description

The present invention refers to a valve apparatus for controlling fluid flow through a duct or opening of an air conditioning system of an aircraft. The aircraft may be an aircraft having vertical take-off and landing (VTOL) capabilities. The VTOL aircraft may have an electrically driven propulsion system (eVTOL).

In many fields of vehicle technology, weight reduction is crucial when working out the vehicle design. The weight reduction requirement is in particular known in the field of aircraft.

In air conditioning systems of aircraft, known and common drive systems for fresh air damper bodies utilize torque motors or geared drives to move the damper bodies. These torque motors or geared drives are technically rather complex and heavy in weight. The complexity of the known torque motors or geared drives further results in an increased likelihood of malfunctions.

JP S49 92048 U teaches a valve apparatus having the features of the preamble of claim 1. Its damper body has a circular shape and interacts with a valve seat hole also having a circular shape. The circumferential sealing line between the damper edge and the hole edge is thus formed by a circle.

DE 23 15 626 A1 teaches a star-shaped damper body having damper protrusions extending therefrom in radial directions. Accordingly, a limited number of radially extending damper protrusions may be provided resulting in a limited increase of the length of the circumferential sealing line.

DE 44 38 250 A1 teaches a vale apparatus having a circular damper body interacting with a circular valve seat hole so that the circumferential sealing line between the damper edge and the hole edge is formed by a circle. Another valve is disclosed in DE 101 62 604 B4.

It is therefore the object of the present invention to provide a valve apparatus for controlling fluid flow through a duct or opening of an air conditioning system of an aircraft that fulfils lightweight requirements on the one hand and increases functional reliability on the other hand.

According to the present invention, this object is achieved by a valve apparatus having the features of claim 1. Further features of the present invention are set forth in the dependent claims.

The present invention proposes a valve apparatus for controlling fluid flow especially through a duct or opening of an air conditioning system of an aircraft. The valve apparatus comprises a valve seat body having a valve seat hole being configured to allow the fluid, especially air, to flow through it and a damper body for closing the valve seat hole thereby stopping the fluid from flowing through it. The valve seat body and the damper body are movable relative to each other between an open configuration and a closed configuration. In the open configuration, the fluid may flow through the valve seat hole, and in the closed configuration, the damper body interacts with the valve seat body in a sealing manner such that the fluid may not flow through the valve seat hole. The valve seat hole has a hole contour formed by a hole edge, and the damper body has a damper contour formed by a damper edge. The hole edge and the damper edge are configured to interact with each other in the sealing manner, thereby forming a circumferential sealing line having a circumferential sealing length.

According to the invention, the hole contour has a plurality of hole protuberances and the damper contour has a plurality of damper protrusions. In terms of their geometry the hole protuberances and the damper protrusions correspond to each other in order to ensure effective sealing along the circumferential sealing line in the closed configuration. The hole protuberances and the damper protrusions have the effect that the circumferential sealing length is larger than a reference length being defined by a length of a circumference of an equal area circle having a circle area that equals to the area of the valve seat hole.

The damper body in the valve apparatus according to the invention may be driven by any kind of driving unit that has the drawback of providing a limited lift only. The damper body may in particular be driven by a solenoid actuator as long as a lift-depending and rather small actuator force is acceptable and the focus is on overcoming the drawback of limited lift.

The inventors discovered that the use of a solenoid actuator, which is well known as such, for actuating a valve apparatus according to the present invention provides at the same time both a lightweight and simple design. A solenoid actuator has an electromagnet and an actuator rod that is driven by the electromagnet in known manner. The lift of the actuator rod that may be obtained from a solenoid actuator is limited. Further, the actuator force of a solenoid actuator significantly depends on the actual lift of the actuator rod. The present invention provides a solution for using a solenoid actuator in a valve apparatus even in view of the aforementioned properties of a solenoid actuator with regard to the available extent of lift and the available actuator force.

The aerodynamic gap, i.e. the flow cross-section, between the hole edge and the damper edge in the open configuration is approximately the length of the circumferential sealing line, i.e. the circumferential sealing length, times the lift of the actuator rod of the solenoid actuator. Thus, by enlarging the circumferential sealing length in the sense of the present invention in comparison to the length of the circumference of the equal area circle, the size of the aerodynamic gap is significantly enlarged while the lift of the actuator rod remains the same. Although the solenoid actuator provides limited lift as such, the present invention ensures that, when using the same size of cross-sectional area of the duct for piping the fluid, a size of the aerodynamic gap may be reached that is comparable to the sizes of aerodynamic gaps that can be achieved in the prior art by torque motors or geared drives allowing non-limited lift in combination with commonly shaped valve seat holes and damper bodies. The disadvantageous property of a limited lift of a solenoid actuator is thus overcome by the enlarged circumferential sealing length according to the present invention.

In the sense of the invention, the equal area circle is an imaginary circle. Its circle area has the same size as the area of the valve seat hole having the hole protuberances. Accordingly, based on the same sizes but different shapes of area, the circumferential sealing length is put into relation to the circular circumference of the imaginary equal area circle.

In advantageous manner, the damper body may be biased relative to the valve seat body towards the open configuration or towards the closed configuration. For example, in case of fresh air supply valves, it is a safety issue to urge the damper body towards the open configuration by the bias and let the actuator force of the solenoid actuator act against the bias when moving the damper body towards the closed configuration. Vice versa, in other applications the bias may urge the damper body to its closed configuration and the actuator force of the solenoid actuator may act against the bias when moving the damper body towards the open configuration.

The actuator force of the solenoid actuator is transmitted through the actuator rod. The solenoid actuator is mounted for moving the damper body relative to the valve seat body towards the closed or open configuration. The solenoid actuator may apply actuator force in bidirectional manner without necessity of any bias towards one of the open and closed configurations. However, if for some reason bias towards one of the open and closed configurations is preferred the actuator force always acts against the bias.

Force transmission means may be arranged between the actuator rod and the damper body for acting there between. The force transmission means are configured to apply a closing force to the damper body that is larger than the actuator force. The ratio between the closing force and the actuator force is preferably at least 5, more preferably at least 20 and most preferably at least 50.

The force transmission means have the advantageous effect that a closing force considerably larger than the lift-depending actuator force may be applied to the damper body in its closed position. Further, the solenoid actuator may advantageously be operated in a hold mode with relatively small electric load thereby preventing the solenoid actuator from damage.

The ratio of the circumferential sealing length to the reference length is preferably at least 1,5, more preferably at least 2,0 and most preferably at least 2,5.

For the hole or damper contour according to the present invention a plurality of different shapes may be envisaged.

In an advantageous manner, all of the hole protuberances and all of the damper protrusions may have the same shape and size.

The hole protuberances and the damper protrusions preferably have a finger-like shape. Finger-like shape in the sense of the present invention means that the respective hole protuberance or damper protrusion is longer than wide.

The valve seat hole has a central region, and the hole protuberances extend from opposite sides of the central region. In a corresponding manner, the damper body has a central portion, and the damper protrusions extend from opposite sides of the central portions.

The hole protuberances on each of the opposite sides of the central region extend with their geometrical axes directed away from the central region parallel to each other. In a corresponding manner, the damper protrusions on each of the opposite sides of the central portion extend with their geometrical axes directed away from the central portion parallel to each other.

Each hole protuberance on one of the opposite sides of the central region may be aligned with one hole protuberance on the other of the opposite sides of the central region. In a corresponding manner, each damper protrusion on one of the opposite sides of the central portion may be aligned with one damper protrusion on the other of the opposite sides of the central portion.

The valve apparatus according to the invention may be used when the limited lift of known solenoid actuators is acceptable and only an increased closing force acting on the damper body is important.

The force transmission means in the sense of the present invention may be any kind of means that applies a closing force to the damper body that is larger than the actuator force. For example, gear transmission means including oval gears may be used as the force transmission means.

Preferably, the force transmission means are formed by a knee-lever mechanism comprising at least first and second levers being rotatably connected with each other by a knee joint. The actuator rod of the solenoid actuator may be rotatably connected with the first lever by a rod joint. The first and second levers may be moved to a flexed relative position corresponding to the open configuration. The first and second levers may be further moved to a stretched relative position corresponding to the closed configuration of the valve apparatus.

At least one of the first and second levers may have stop means at least for stopping further rotational movement beyond the stretched relative position of the first and second levers. Preferably, movement of the first and second levers are stopped at least slightly before they reach a fully stretched relative position in which they are exactly aligned. However, it is also feasible to stop first and second levers in the fully stretched relative position when suitable initiating means for initiating controlled flexing movement out of the fully stretched relative position towards the flexed relative position are provided. Suitable initiating means may for example be springs that need to develop just a small force for initiating the flexing movement.

In an advantageous manner, the solenoid actuator may be pivotably mounted on a fixed supporting beam. The supporting beam itself may be fixed to the valve seat body by mounting bars.

The damper body may be fixed to a movably guided traverse. In an advantageous manner, the traverse may be movably guided by the mounting bars for mounting the supporting beam. Thus, the mounting bars serve a double function, namely fixing the supporting beam to the valve seat body on the one hand and movably guiding the traverse carrying the damper body on the other hand. Weight reduction is thereby achieved because no separate guiding means for guiding the traverse are necessary beyond the mounting bars.

Springs may be fitted to the mounting bars for urging the traverse towards the supporting beam or for urging the traverse towards the valve seat body, thereby effecting bias towards the open or the closed configuration. For example, the springs may be pressure springs acting between the valve seat body and the traverse or tension springs acting between the supporting beam and the traverse when bias towards the open configuration is intended.

The first lever may be rotatably connected with the supporting beam by a beam joint. The second lever may be rotatably connected with the traverse by a traverse joint.

In the following, one embodiment of the present invention is described in an exemplary manner by referring to the drawings, in which:
- Fig. 1: shows a perspective view of an embodiment of the valve apparatus according to the present invention in its open configuration;
- Fig. 2: shows a top plan view of the valve apparatus shown in Fig. 1;
- Fig. 3: shows a cross-sectional view according to section A-A in Fig. 2;
- Fig. 4: shows an enlarged view of detail D as marked in Fig. 3;
- Fig. 5: shows a perspective view from the bottom side of the valve apparatus shown in Fig. 1;
- Fig. 6: shows a side plan view of the valve apparatus shown in Fig. 2 from the left;
- Fig. 7: shows a perspective view of the embodiment of the valve apparatus according to the present invention in its closed configuration;
- Fig. 8: shows a top plan view of the valve apparatus shown in Fig. 7;
- Fig. 9: shows a cross-sectional view of the valve apparatus according to section A-A in Fig. 8;
- Fig. 10: shows an enlarged view of detail D as marked in Fig. 9;
- Fig. 11: shows a perspective view from the bottom side of the valve apparatus shown in Fig. 7;
- Fig. 12: shows a side plan view of the valve apparatus shown in Fig. 8 from the left;
- Fig. 13: shows a front plan view of the valve apparatus shown in Fig. 7 similar to the cross-sectional view of Fig. 9 and with parts of the supporting beam broken away so that force transmission means in the form of a knee-lever mechanism may be seen;
- Fig. 14: shows an enlarged view of detail D as marked in Fig. 13; and
- Fig. 15: shows a bottom plan view of the valve apparatus shown in Figs. 1, 5, 7 and 11 with the equal area circle and a further circle having a circumference with a length that equals the length of the circumferential sealing line of the valve apparatus as shown.

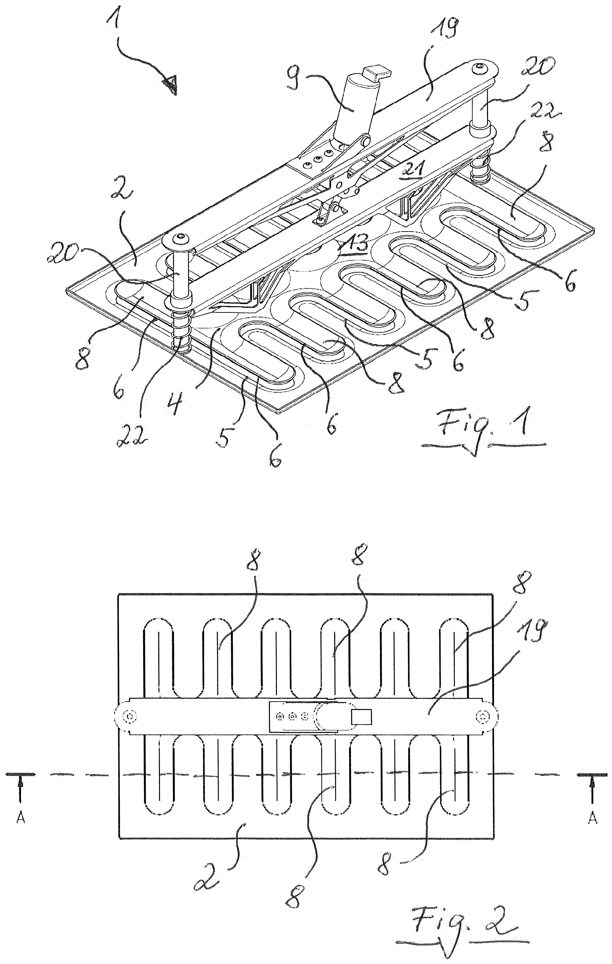

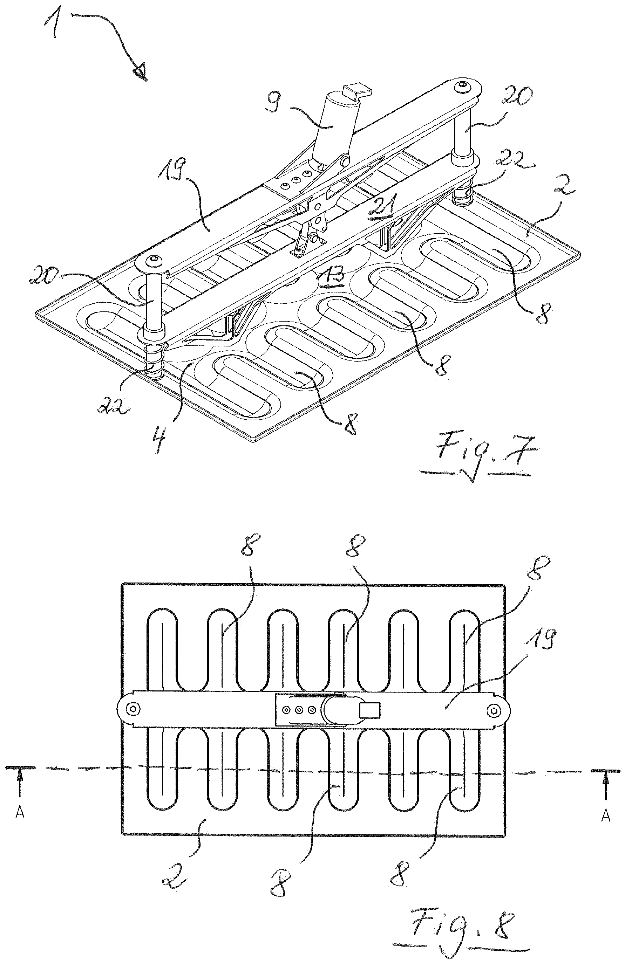

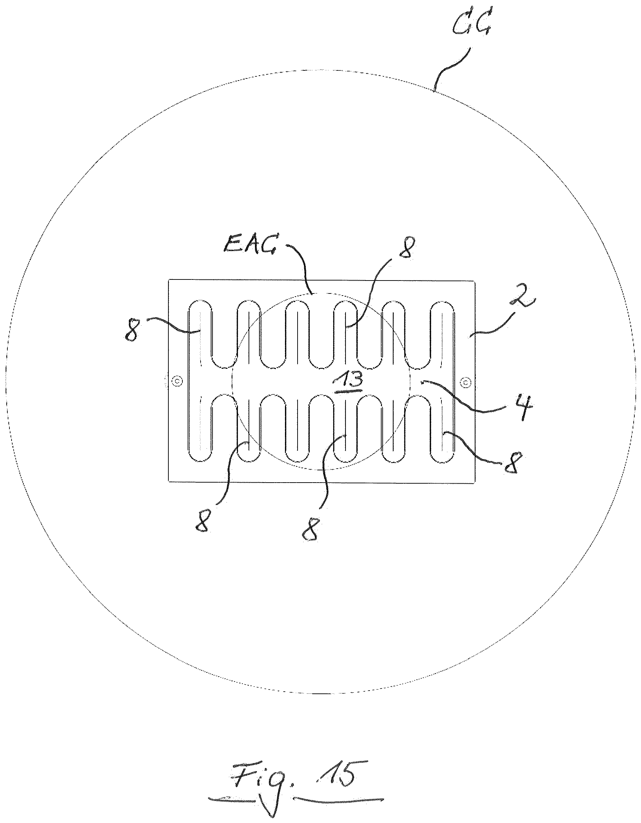

Figs. 1 through 15 show the same embodiment of a valve apparatus 1 according to the present invention. Figs. 1 through 6 show the open configuration of valve apparatus 1 while Figs. 7 through 14 show the closed configuration of valve apparatus 1. The bottom plan view according to Fig. 15 is identical for both the open configuration and the closed configuration. Like reference numerals in different drawings refer to like elements of valve apparatus 1.

Fig. 1 shows valve apparatus 1 in a perspective view from the top. It has a rectangular valve seat body 2 suitable to be mounted in a corresponding cross-section of a duct (not shown) or opening (not shown) for piping a fluid. In case the duct or opening is part of an air conditioning system, the fluid is air. In case of other applications of valve apparatus 1, a fluid other than air may flow through valve apparatus 1. Further, although valve seat body 2 is shown with a rectangular outer shape, it is noted that the outer shape of valve seat body 2 may deviate from a rectangular or square shape and may for example take a circular shape for ducts or openings having a circular cross section or shape. In any case, valve seat body 2 is adapted to be mounted in the cross section of a duct in a manner that seals between the outer edge of valve seat body 2 and the inner wall of the duct. Fluid is not allowed to flow between the outer edge of valve seat body 2 and the inner wall of the duct that surrounds the outer edge of valve seat body 2.

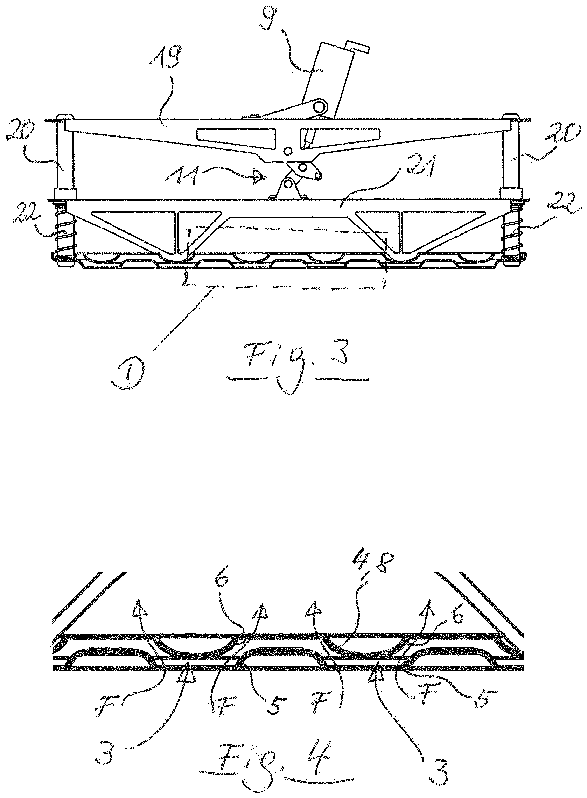

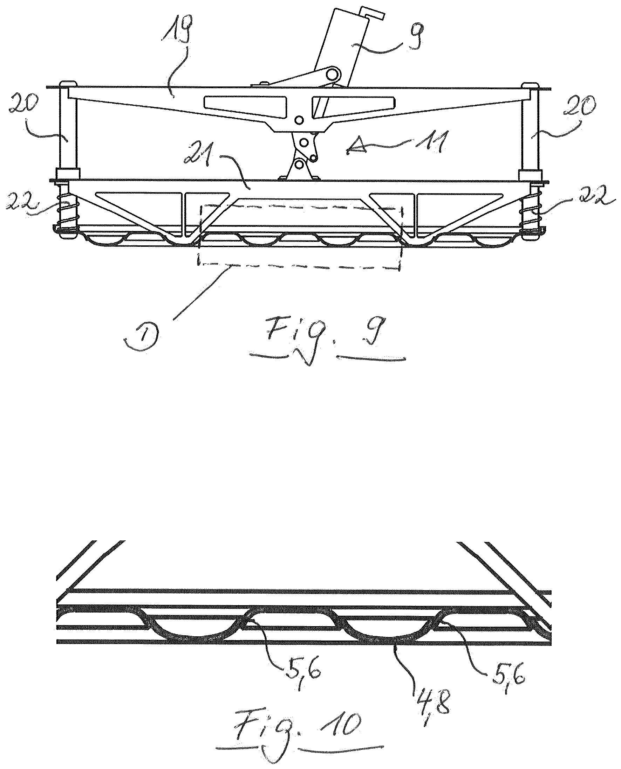

Valve seat body 2 has a valve seat hole 3 as marked in Fig. 4. Fluid may flow through valve seat hole 3 when valve apparatus 1 is in its open configuration as in Figs. 1 through 6. For closing valve seat hole 3 and thus preventing any fluid from flowing through it, a damper body 4 may be moved from the open configuration shown in Fig. 4 to the closed configuration shown in Fig. 10. In the open configuration, fluid may flow through valve seat hole 3 as marked by arrows F in Fig. 4.

Valve seat body 2 and damper body 4 are manufactured by deep or punch-drawing methods. Then, they have non-flat surfaces and sufficient structural stiffness. Alternatively, valve seat body 2 and damper body 4 may be obtained from other manufacturing methods resulting in flat surfaces. Structural stiffness may then be ensured by a honeycomb structure or the like.

As best seen in Figs. 1, 2, 5, 7, 8, 11 and 15, in the present embodiment the valve seat hole 3 and the damper body 4 have a double-comb like shape.

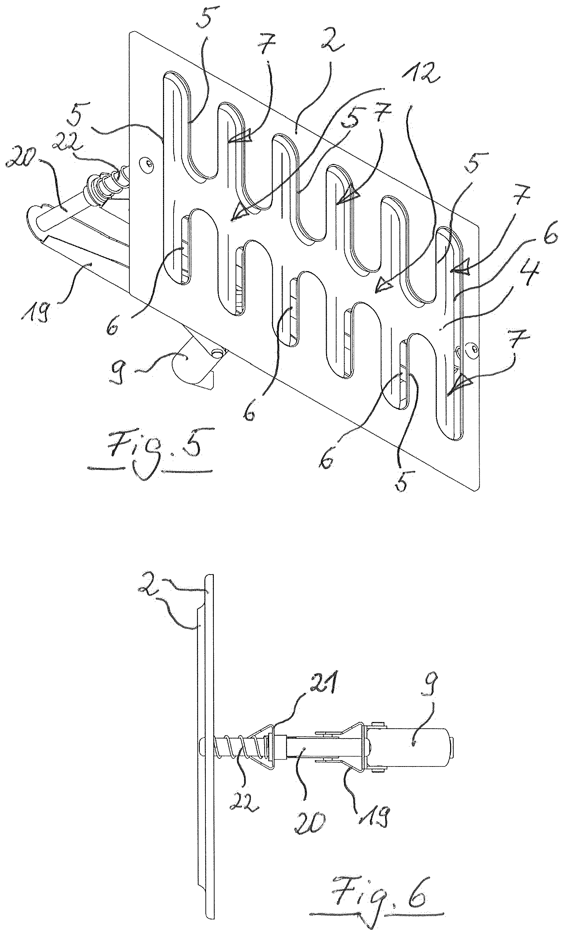

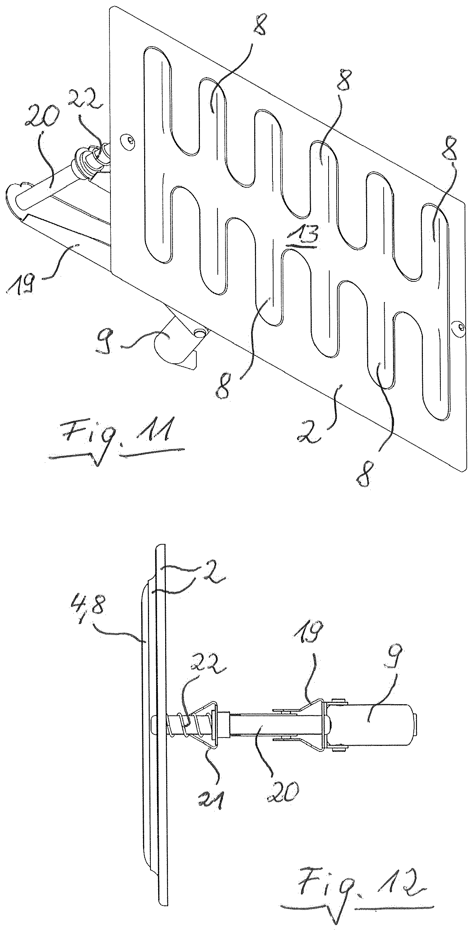

Valve seat hole 3 is composed of an elongated central region 12 from which a total number of twelve hole protuberances extend away (see Figs. 5 and 11). On each of the two opposite sides of central region 12 there are six hole protuberances 7. As shown all of the hole protuberances 7 have the same finger-like shape and size. Further, in the present embodiment, the six hole protuberances 7 extending on one side of central region 12 are aligned with the six hole protuberances 7 extending on the other side of central region 12. All hole protuberances 7 have rounded tips as shown in the drawings.

As best shown in Figs. 1 and 7, damper body 4 has an elongate central portion 13 from which twelve damper protrusions 8 extend away. As shown, six damper protrusions 8 extend on one side of central portion 13 and six damper protrusions 8 extend on the opposite side of central portion 13. As the hole protuberances 7 in valve seat hole 3, in the present embodiment, damper protrusions 8 have a corresponding finger-like shape and size with rounded tips. As in case of the hole protuberances 7, each of the six damper protrusions 8 extending on one side of central region 13 is aligned with a respective one of the six damper protrusions 8 extending on the other side of central region 13.

The shown number, shape and size of hole protuberances 7 and damper protrusions 8, respectively, have exemplary character only. It is noted that other numbers, shapes and sizes of hole protuberances 7 and damper protrusions 8 may be applied in the sense of the present invention.

Valve seat hole 3 is surrounded by its hole contour having a surrounding hole edge 5 as shown in Figs. 1 and 5. Damper body 4 has its damper contour formed by a surrounding damper edge 6 as shown in Figs. 1 and 5.

In the open configuration according to Fig. 4, surrounding damper edge 6 is spaced apart from surrounding hole edge 5 so that fluid may flow through a surrounding aerodynamic gap formed between damper edge 6 and hole edge 5. In the closed configuration according to Fig. 10, surrounding damper edge 6 abuts against surrounding hole edge 5 thereby forming a circumferential sealing line that has a circumferential sealing length. This circumferential sealing length corresponds to the length of the circumference of the double-comb shaped valve seat hole 3 or damper body 4. The sealing between hole edge 5 and damper edge 6 may be improved by sealing material applied to one ot both of them (coating or other application).

The mass flow that may flow through a given aerodynamic gap depends on its size, i.e. the size of the cross-sectional area of the aerodynamic gap. The size of the aerodynamic gap may approximately be calculated as the product of the circumferential sealing length times the lift of damper body 4. The lift of damper body 4 is the distance by which damper body 4 has been moved in Fig. 10 upwards in vertical direction in order to arrive at its position corresponding to the open configuration shown in Fig. 4.

According to the present invention, the size of the aerodynamic gap is significantly enlarged because the circumferential sealing length, i.e. the length of hole edge 5 or damper edge 6, is significantly enlarged. This is explained in the following more closely with reference to Fig. 15.

Fig. 15 depicts a bottom plan view of valve apparatus 1 with two additional circles that are no structural features of valve apparatus 1 but serve explanatory and comparative purposes. Damper body 4 with its central portion 13 and damper protrusions 8 may be seen through valve seat hole 3 in valve seat body 2.

A smaller circle is marked as equal area circle EAC in Fig. 15. The circle area of equal area circle EAC has the same size as the hole area enclosed by double-comb shaped hole contour of valve seat hole 3. Assuming that equal area circle EAC would form a damper contour of a damper body, the size of the area of the aerodynamic gap would be calculated as the circumferential length of equal area circle EAC times the lift of the damper body.

According to the present invention, the aerodynamic gap may be significantly larger than the one calculated on the basis of a circular damper contour according to equal area circle EAC. The circumferential sealing length of the double-comb like shaped hole or damper contour of the present embodiment is much longer than the circumferential length of equal area circle EAC.

As shown in Fig. 15, the circumferential sealing length of the double-comb like shape is as long as the circumference of comparative circle CC included in Fig. 15 for comparative purposes. In other words: For achieving the same circumferential sealing length as with the double-comb shaped valve seat hole 3 and damper body 4 according to the present invention by means of a circular valve seat hole and damper body, it would be necessary to cover considerably more cross-sectional area and thus space because the duct or opening for piping the fluid would have to be enlarged in proportional manner. Also, the increased cross-sectional area would require a higher closing force because the pressure difference acts on an increased area of the damper body.

The present invention achieves much more circumferential sealing length while at the same time not covering more hole area than the one enclosed by equal area circle EAC. In Fig. 15, the circumferential sealing length of the double-comb shaped valve seat hole 3 and damper body 4, i.e. the circumference of comparative circle CC, is approximately 3,5 times longer than the circumference of equal area circle EAC.

The length of the circumference of equal area circle EAC serves as a reference parameter for the present invention. Number, shape and size of hole protuberances 7 and damper protrusions 8 may widely vary within the context of the present invention. The size of equal area circle EAC only varies in dependence of the hole size of valve seat hole 3 regardless of any specific shape of valve seat hole 3 under the present invention.

For example, not all twelve damper protrusions 8 in Fig. 15 may have the same length. For example, every second damper protrusion may be only half as long as the respective neighbored damper protrusion 8.

As a further example, in an alternative geometry of damper body 4 each of the six upper damper protrusions 8 in Fig. 15 could have different lengths in such a way that their rounded tip portions are located along an arc of a circle.

In the embodiment as shown, damper body 4 is linearly movable between the open and the closed configurations. In general, it would be alternatively feasible under the present invention to rotatably move damper body 4 between its open and closed configurations. As long as the maximum angle of rotation would be small enough the rotational lift (lift resulting from the angle of rotation) of damper body 4 would be rather small and the principle of calculating the size of the aerodynamic gap as discussed herein before could still be applied. It could be assumed that the lift of damper body 4 along the complete circumferential sealing line is constant for approximating the size of the aerodynamic gap. If bias towards the open or closed configuration is preferred in this context for example a leaf or plate spring could be employed for effecting the bias.

For linear movement of damper body 4 relative to valve seat body 2, damper body 4 is fixed to a traverse 21 that is movably guided along two mounting bars 20 as can be best seen in Figs. 1, 3, 7, 9 and 13. The two mounting bars 20 are fixed to valve seat body 2 by suitable means like screws or the like. Pressure springs 22 in the form of coil springs act between valve seat body 2 and traverse 21 in order to urge or bias traverse 21 together with damper body 4 away from the closed configuration according to Figs. 7 through 14 towards the open configuration according to Figs. 1 through 6.

Mounting bars 20 extend through opposite ends of traverse 21 and carry on their upper free ends a supporting beam 19. The supporting beam 19 is fixed at the upper ends of mounting bars 20 by suitable means like screws or the like. Accordingly, supporting beam 19 is not movable relative to valve seat body 2.

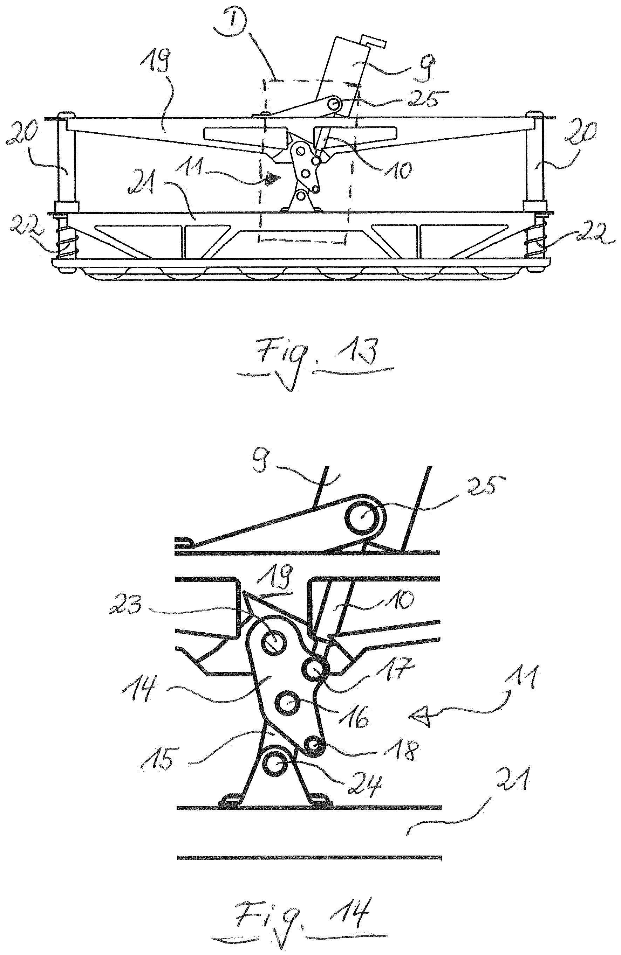

Supporting beam 19 supports a solenoid actuator 9 having an actuator rod 10 best seen in Fig. 14. Solenoid actuator 9 is mounted to support beam 19 by an actuator joint 25 as marked in Figs. 13 and 14. Actuator joint 25 effects sufficient degree of rotational freedom for solenoid actuator 9 when traverse 21 and damper body 4 are moved between the open and closed configurations.

As can be seen in Fig. 14, in the present embodiment force transmission means in the form of a knee-lever mechanism 11 are arranged between actuator rod 10 and traverse 21. Force transmission means at this place of valve apparatus 1 have the function to convert the relatively small actuator force delivered by actuator rod 10 into a relatively large closing force acting on traverse 21 and thus damper body 4 for reliably and safely pressing damper edge 6 against hole edge 5 in the closed configuration. If solenoid actuator 9 is electrically activated actuator rod 10 extends and forces traverse 21 through knee-lever mechanism 11 against the bias of pressure springs 22 into the closed configuration. Switching solenoid actuator 9 currentless results in not applying a closing force to traverse 21 and the action of pressure springs 22 lifts traverse 21 together with damper body 4 thereby moving them to the open configuration.

While various types of force transmission means may be suitable, it turned out that a knee-lever mechanism 11 acts advantageously. In the present embodiment, knee-lever mechanism 11 comprises a first lever 14 and a second lever 15. The first and second levers 14, 15 are rotatably connected with each other by knee joint 16. As shown in Fig. 14, the lower free end of actuator rod 10 is rotatably connected with first lever 14 through rod joint 17. Further, first lever 14 is rotatably mounted to support beam 19 through beam joint 23. Second lever 15 is rotatably mounted to traverse 21 by traverse joint 24.

When solenoid actuator 9 is currentless, the action of pressure springs 22 urges first and second levers 14, 15 of knee-lever mechanism 11 to a flexed relative position as can be seen in Figs. 1 and 3 showing the situation of knee-lever mechanism 11 in the open configuration. Loading solenoid actuator 9 with current results in extending actuator rod 10 thereby pivoting first lever 14 clockwise around knee joint 23 and second lever 15 anticlockwise around traverse joint 24 to a stretched relative position in which first and second levers 14, 15 are not fully or exactly aligned as can be seen in Fig. 14. In this stretched relative position, second lever 15 transfers a closing force to traverse 21 and damper body 4 that sealingly presses damper edge 6 against hole edge 5 against the bias of pressure springs 22.

In order to avoid further rotational movement of first and second levers 14, 15 beyond the stretched relative position shown in Fig. 14 through the action of actuator rod 10, first lever 14 has at its lower end in Fig. 14 a stop means 18 in the form of a bolt or the like. The bolt protrudes into the plane of projection of Fig. 14 so that it abuts against the right side edge of second lever 15 when knee-lever mechanism 11 reaches the stretched relative position according to Fig. 14. Stop means 18 thereby provides for a collision between first and second levers 14, 15 and stops further rotational movement beyond the shown stretched relative position by positive locking.

### List of reference signs

- 1: Valve apparatus
- 2: Valve seat body
- 3: Valve seat hole
- 4: Damper body
- 5: Hole edge of valve seat hole 3
- 6: Damper edge of damper body 4
- 7: Hole protuberance
- 8: Damper protrusion
- 9: Solenoid actuator
- 10: Actuator rod
- 11: Force transmission means, knee lever mechanism
- 12: Central region of valve seat hole 3
- 13: Central portion of damper body 4
- 14: First lever
- 15: Second lever
- 16: Knee joint
- 17: Rod joint
- 18: Stop means
- 19: Supporting beam
- 20: Mounting bar
- 21: Traverse
- 22: Spring
- 23: Beam joint
- 24: Traverse joint
- 25: Actuator joint

- CC: Comparative circle
- EAC: Equal area circle
- F: Fluid flow

## Claims

1. Valve apparatus for controlling fluid flow through a duct or opening of an air conditioning system of an aircraft, the valve apparatus (1) comprising:
• a valve seat body (2) having a valve seat hole (3) being configured to allow the fluid to flow through it, and
• a damper body (4) for closing the valve seat hole (3),
• wherein the valve seat body (2) and the damper body (4) are movable relative to each other between an open configuration and a closed configuration, wherein in the open configuration the fluid may flow through the valve seat hole (3) and in the closed configuration the damper body (4) interacts with the valve seat body (2) in a sealing manner such that the fluid may not flow through the valve seat hole (3),
• wherein the valve seat hole (3) has a hole contour formed by a hole edge (5) and the damper body (4) has a damper contour formed by a damper edge (6), the hole edge (5) and the damper edge (6) being configured to interact with each other in the sealing manner thereby forming a circumferential sealing line having a circumferential sealing length,
**characterized in that**
• the hole contour has a plurality of hole protuberances (7) and the damper contour has a plurality of damper protrusions (8), so that the circumferential sealing length is larger than a reference length being defined by a length of a circumference of an equal area circle (EAC) having an area equal to an area of the valve seat hole (3),
• wherein the valve seat hole (3) has a central region (12) and the hole protuberances (7) extend from opposite sides of the central region (12), and the damper body (4) has a central portion (13) and the damper protrusions (8) extend from opposite sides of the central portion (13), and
• wherein the hole protuberances (7) on each of the opposite sides of the central region (12) extend parallel to each other and the damper protrusions (8) on each of the opposite sides of the central portion (13) extend parallel to each other.

2. Valve apparatus according to claim 1,
**characterized in that**
a ratio of the circumferential sealing length to the reference length is at least 1,5.

3. Valve apparatus according to claim 1,
**characterized in that**
a ratio of the circumferential sealing length to the reference length is at least 2,0.

4. Valve apparatus according to claim 1,
**characterized in that**
a ratio of the circumferential sealing length to the reference length is at least 2,5.

5. Valve apparatus according to one of the preceding claims,
**characterized in that**
all of the hole protuberances (7) and all of the damper protrusions (8) have the same shape and size.

6. Valve apparatus according to one of the preceding claims,
**characterized in that**
the hole protuberances (7) and the damper protrusions (8) have a finger-like shape.

7. Valve apparatus according to one of the preceding claims,
**characterized in that**
each hole protuberance (7) on one of the opposite sides of the central region (12) is aligned with one hole protuberance (7) on the other of the opposite sides of the central region (12), and each damper protrusion (8) on one of the opposite sides of the central portion (13) is aligned with one damper protrusion (8) on the other of the opposite sides of the central portion (13).

8. Valve apparatus according to one of the preceding claims,
**characterized in that**
the valve apparatus (1) comprises a solenoid actuator (9) having an actuator rod (10) for transmitting an actuator force, the solenoid actuator (9) being mounted for moving the damper body (4) relative to the valve seat body (2) towards the closed or open configuration, wherein force transmission means (11) are arranged between the actuator rod (10) and the damper body (4), the force transmission means (11) being configured to apply a closing force to the damper body (4) that is larger than the actuator force.

9. Valve apparatus according to claim 8,
**characterized in that**
the force transmission means are formed by a knee lever mechanism (11) comprising a first lever (14) and a second lever (15) being rotatably connected with each other by a knee joint (16), and the actuator rod (10) is rotatably connected with the first lever (14) by a rod joint (17), wherein the first and second levers (14, 15) may be moved towards a flexed relative position corresponding to the open configuration and may be moved towards a stretched relative position corresponding to the closed configuration.

10. Valve apparatus according to claim 9,
**characterized in that**
at least one of the first and second levers (14, 15) has stop means (18) for stopping further rotational movement beyond the stretched relative position.

11. Valve apparatus according to one of claims 8 to 10,
**characterized in that**
the solenoid actuator (9) is pivotably mounted on a fixed supporting beam (19).

12. Valve apparatus according to claim 11,
**characterized in that**
the supporting beam (19) is fixed to the valve seat body (2) by mounting bars (20).

13. Valve apparatus according to one of claims 8 to 12,
**characterized in that**
the damper body (4) is fixed to a movably guided traverse (21).

14. Valve apparatus according to claim 13 when depending from claim 12,
**characterized in that**
the traverse (21) is movably guided by the mounting bars (20) for mounting the supporting beam (19).

15. Valve apparatus according to one of claims 8 to 14,
**characterized in that**
the damper body (4) is biased relative to the valve seat body (2) towards the open configuration or towards the closed configuration.

16. Valve apparatus according to claim 15 when depending from one of claims 11 or 12 and also depending from one of claims 13 or 14,
**characterized in that**
springs (22) are fitted to the mounting bars (20) for urging the traverse (21) towards the supporting beam (19) or for urging the traverse (21) towards the valve seat body (2) thereby effecting the bias.

17. Valve apparatus according to one of claims 13 to 16 when depending from claim 11 and also depending from one of claims 9 and 10,
**characterized in that**
the first lever (14) is rotatably connected with the supporting beam (19) by a beam joint (23) and the second lever (15) is rotatably connected with the traverse (21) by a traverse joint (24).

## Patentansprüche

1. Ventilvorrichtung zum Steuern eines Fluidstromes durch eine Leitung oder eine Öffnung einer Klimaanlage eines Luftfahrzeuges, wobei die Ventilvorrichtung (1) umfasst:
• einen Ventilsitzkörper (2) mit einem Ventilsitzloch (3), das derart ausgelegt ist, dass es dem Fluid ermöglicht, durch es hindurchzuströmen, und
• einen Klappenkörper (4) zum Schließen des Ventilsitzloches (3),
• wobei der Ventilsitzkörper (2) und der Klappenkörper (4) relativ zueinander zwischen einer offenen Konfiguration und einer geschlossenen Konfiguration bewegbar sind, wobei in der offenen Konfiguration das Fluid durch das Ventilsitzloch (3) strömen kann und in der geschlossenen Konfiguration der Klappenkörper (4) mit dem Ventilsitzkörper (2) in einer abdichtenden Weise derart zusammenwirkt, dass das Fluid nicht durch das Ventilsitzloch (3) strömen kann,
• wobei das Ventilsitzloch (3) eine Lochkontur aufweist, die von einer Lochkante (5) gebildet ist, und der Klappenkörper (4) eine Klappenkontur aufweist, die von einer Klappenkante (6) gebildet ist, wobei die Lochkante (5) und die Klappenkante (6) so ausgelegt sind, dass sie miteinander in der abdichtenden Weise zusammenwirken können und dadurch eine Umfangsdichtlinie mit einer Umfangsdichtlänge bilden,
**dadurch gekennzeichnet, dass**
• die Lochkontur eine Vielzahl von Lochausstülpungen (7) und die Klappenkontur eine Vielzahl von Klappenvorsprüngen (8) aufweist, sodass die Umfangsdichtlänge größer ist als eine Referenzlänge, die durch eine Länge eines Umfangs eines Gleichflächenkreises (EAC) definiert ist, der eine Fläche aufweist, die gleich einer Fläche des Ventilsitzloches (3) ist,
• wobei das Ventilsitzloch (3) einen Zentralbereich (12) aufweist und sich die Lochausstülpungen (7) von gegenüberliegenden Seiten des Zentralbereichs (12) aus erstrecken, und wobei der Klappenkörper (4) einen Zentralabschnitt (13) aufweist und sich die Klappenvorsprünge (8) von gegenüberliegenden Seiten des Zentralabschnitts (13) aus erstrecken, und
• wobei sich die Lochausstülpungen (7) auf jeder der gegenüberliegenden Seiten des Zentralbereichs (12) parallel zueinander erstrecken, und wobei sich die Klappenvorsprünge (8) auf jeder der gegenüberliegenden Seiten des Zentralabschnitts (13) parallel zueinander erstrecken.

2. Ventilvorrichtung nach Anspruch 1,
**dadurch gekennzeichnet, dass**
ein Verhältnis der Umfangsdichtlänge zu der Referenzlänge wenigstens 1,5 beträgt.

3. Ventilvorrichtung nach Anspruch 1,
**dadurch gekennzeichnet, dass**
ein Verhältnis der Umfangsdichtlänge zu der Referenzlänge wenigstens 2,0 beträgt.

4. Ventilvorrichtung nach Anspruch 1,
**dadurch gekennzeichnet, dass**
ein Verhältnis der Umfangsdichtlänge zu der Referenzdichtlänge wenigstens 2,5 beträgt.

5. Ventilvorrichtung nach einem der vorangehenden Ansprüche,
**dadurch gekennzeichnet, dass**
alle Lochaustülpungen (7) und alle Klappenvorsprünge (8) dieselbe Form und Größe aufweisen.

6. Ventilvorrichtung nach einem der vorangehenden Ansprüche,
**dadurch gekennzeichnet, dass**
die Lochaustülpungen (7) und die Klappenvorsprünge (8) eine fingerartige Form aufweisen.

7. Ventilvorrichtung nach einem der vorangehenden Ansprüche,
**dadurch gekennzeichnet, dass**
jede Lochaustülpung (7) auf einer der gegenüberliegenden Seiten des Zentralbereichs (12) mit einer Lochaustülpung (7) auf der anderen der gegenüberliegenden Seiten des Zentralbereichs (12) fluchtet, und jeder Klappenvorsprung (8) auf einer der gegenüberliegenden Seiten des Zentralabschnitts (13) mit einem Klappenvorsprung (8) auf der anderen der gegenüberliegenden Seiten des Zentralabschnitts (13) fluchtet.

8. Ventilvorrichtung nach einem der vorangehenden Ansprüche,
**dadurch gekennzeichnet, dass**
die Ventilvorrichtung (1) einen Solenoidaktuator (9) mit einer Aktuatorstange (10) zum Übertragen einer Aktuatorkraft umfasst, wobei der Solenoidaktuator (9) zum Bewegen des Klappenkörpers (4) relativ zu dem Ventilsitzkörper (2) in Richtung der geschlossenen oder offenen Konfiguration angebracht ist, wobei Kraftübertragungsmittel (11) zwischen der Aktuatorstange (10) und dem Klappenkörper (4) angeordnet sind, wobei die Kraftübertragungsmittel (11) derart ausgelegt sind, dass sie eine Schließkraft auf den Klappenkörper (4) aufbringen, die größer ist als die Aktuatorkraft.

9. Ventilvorrichtung nach einem der vorangehenden Ansprüche,
**dadurch gekennzeichnet, dass**
die Kraftübertragungsmittel von einem Kniehebelmechanismus (11) gebildet sind, der einen ersten Hebel (14) und einen zweiten Hebel (15) umfasst, die über ein Kniegelenk (16) drehbar miteinander verbunden sind, und dass die Aktuatorstange (10) über ein Stangengelenk (17) mit dem ersten Hebel (14) verbunden ist, wobei der erste und der zweite Hebel (14, 15) in Richtung einer gebeugten Relativposition bewegt werden können, die der offenen Konfiguration entspricht, und in Richtung einer gestreckten Relativposition bewegt werden können, die der geschlossenen Konfiguration entspricht.

10. Ventilvorrichtung nach Anspruch 9,
**dadurch gekennzeichnet, dass**
wenigstens der erste oder der zweite Hebel (14, 15) Anschlagmittel (18) zum Stoppen einer weitergehenden Drehbewegung über die gestreckte Relativposition hinaus aufweist.

11. Ventilvorrichtung nach einem der Ansprüche 8 bis 10,
**dadurch gekennzeichnet, dass**
der Solenoidaktuator (9) schwenkbar an einem befestigten Trägerbalken (19) angebracht ist.

12. Ventilvorrichtung nach Anspruch 11,
**dadurch gekennzeichnet, dass**
der Trägerbalken (19) mittels Halterungsstreben (20) an dem Ventilsitzkörper (2) befestigt ist.

13. Ventilvorrichtung nach einem der Ansprüche 8 bis 12,
**dadurch gekennzeichnet, dass**
der Klappenkörper (4) an einem bewegbar geführten Querträger (21) befestigt ist.

14. Ventilvorrichtung nach Anspruch 13 mit Abhängigkeit von Anspruch 12,
**dadurch gekennzeichnet, dass**
der Querträger (21) mittels der Halterungsstreben (20) zum Haltern des Trägerbalkens (19) bewegbar geführt ist.

15. Ventilvorrichtung nach einem der Ansprüche 8 bis 14,
**dadurch gekennzeichnet, dass**
der Klappenkörper (4) relativ zu dem Ventilsitzkörper (2) in Richtung der offenen Konfiguration oder in Richtung der geschlossenen Konfiguration vorgespannt ist.

16. Ventilvorrichtung nach Anspruch 15 mit Abhängigkeit von einem der Ansprüche 11 oder 12 und mit weiterer Abhängigkeit von einem der Ansprüche 13 oder 14,
**dadurch gekennzeichnet, dass**
Federn (22) an den Halterungsstreben (20) angebracht sind, um den Querträger (21) in Richtung des Trägerbalkens (19) zu drücken oder um den Querträger (21) in Richtung des Ventilsitzkörpers (2) zu drücken und dadurch die Vorspannung zu bewirken.

17. Ventilvorrichtung nach einem der Ansprüche 13 bis 16 mit Abhängigkeit von Anspruch 11 und weiterer Abhängigkeit von einem der Ansprüche 9 und 10,
**dadurch gekennzeichnet, dass**
der erste Hebel (14) über ein Balkenlager (23) drehbar mit dem Trägerbalken (19) verbunden ist und der zweite Hebel (15) über ein Querträgerlager (24) drehbar mit dem Querträger (21) verbunden ist.

## Revendications

1. Appareil à soupape pour réguler le flux de fluide à travers un conduit ou une ouverture d'un système de conditionnement d'air d'un aéronef, l'appareil à soupape (1) comprenant :
un corps de siège de soupape (2) ayant un trou de siège de soupape (3) qui est configuré pour permettre au fluide de s'écouler à travers ce dernier, et
un corps de registre (4) pour fermer le trou de siège de soupape (3),
dans lequel le corps de siège de soupape (2) et le corps de registre (4) sont mobiles l'un par rapport à l'autre entre une configuration ouverte et une configuration fermée, dans lequel dans la configuration ouverte, le fluide peut s'écouler à travers le trou de siège de soupape (3) et dans la configuration fermée, le corps de registre (4) interagit avec le corps de siège de soupape (2) d'une manière étanche de sorte que le fluide ne peut pas s'écouler à travers le trou de siège de soupape (3),
dans lequel le trou de siège de soupape (3) a un contour de trou formé par un bord de trou (5) et le corps de registre (4) a un contour de registre formé par un bord de registre (6), le bord de trou (5) et le bord de registre (6) étant configurés pour interagir entre eux d'une manière étanche, formant ainsi une ligne d'étanchéité circonférentielle ayant une longueur d'étanchéité circonférentielle,
**caractérisé en ce que** :
le contour de trou a une pluralité de protubérances de trou (7) et le contour de registre a une pluralité de saillies de registre (8), de sorte que la longueur d'étanchéité circonférentielle est supérieure à une longueur de référence qui est définie par une longueur d'une circonférence d'un cercle de surface égale (EAC) ayant une surface égale à une surface du trou de siège de soupape (3),
dans lequel le trou de siège de soupape (3) a une région centrale (12) et les protubérances de trou (7) s'étendent à partir des côtés opposés de la région centrale (12) et le corps de registre (4) a une partie centrale (13) et les saillies de registre (8) s'étendent à partir des côtés opposés de la partie centrale (13), et
dans lequel les protubérances de trou (7) sur chacun des côtés opposés de la région centrale (12) s'étendent parallèlement entre elles et les saillies de registre (8) sur chacun des côtés opposés de la partie centrale (13) s'étendent parallèlement entre elles.

2. Appareil à soupape selon la revendication 1,
**caractérisé en ce que** :
un rapport de la longueur d'étanchéité circonférentielle sur la longueur de référence est d'au moins 1,5.

3. Appareil à soupape selon la revendication 1,
**caractérisé en ce que** :
un rapport de la longueur d'étanchéité circonférentielle sur la longueur de référence est d'au moins 2,0.

4. Appareil à soupape selon la revendication 1,
**caractérisé en ce que** :
un rapport de la longueur d'étanchéité circonférentielle sur la longueur de référence est d'au moins 2,5.

5. Appareil à soupape selon l'une des revendications précédentes,
**caractérisé en ce que** :
toutes les protubérances de trou (7) et toutes les saillies de registre (8) ont la même forme et la même taille.

6. Appareil à soupape selon l'une des revendications précédentes,
**caractérisé en ce que** :
les protubérances de trou (7) et les saillies de registre (8) ont une forme de doigt.

7. Appareil à soupape selon l'une des revendications précédentes,
**caractérisé en ce que** :
chaque protubérance de trou (7) sur l'un des côtés opposés de la région centrale (12) est alignée avec une protubérance de trou (7) sur l'autre des côtés opposés de la région centrale (12) et chaque saillie de registre (8) sur l'un des côtés opposés de la partie centrale (13) est alignée avec une saillie de registre (8) sur l'autre des côtés opposés de la partie centrale (13).

8. Appareil à soupape selon l'une des revendications précédentes,
**caractérisé en ce que** :
l'appareil à soupape (1) comprend un actionneur à solénoïde (9) ayant une tige d'actionneur (10) pour transmettre une force d'actionneur, l'actionneur à solénoïde (9) étant monté pour déplacer le corps de registre (4) par rapport au corps de siège de soupape (2) vers la configuration fermée ou ouverte, dans lequel les moyens de transmission de force (11) sont agencés entre la tige d'actionneur (10) et le corps de registre (4), les moyens de transmission de force (11) étant configurés pour appliquer une force de fermeture sur le corps de registre (4) qui est supérieure à la force d'actionneur.

9. Appareil à soupape selon revendication 8,
**caractérisé en ce que** :
les moyens de transmission de force sont formés par un mécanisme de genouillère (11) comprenant un premier levier (14) et un second levier (15) qui sont raccordés, en rotation, entre eux par une genouillère (16), et la tige d'actionneur (10) est raccordée, en rotation, avec le premier levier (14) par un joint de tige (17), dans lequel les premier et second leviers (14, 15) peuvent être déplacés vers une position relative fléchie correspondant à la configuration ouverte et peuvent être déplacés vers une position relative étirée correspondant à la configuration fermée.

10. Appareil à soupape selon revendication 9,
**caractérisé en ce que** :
au moins l'un des premier et second leviers (14, 15) a des moyens de butée (18) pour arrêter le mouvement de rotation supplémentaire au-delà de la position relative étirée.

11. Appareil à soupape selon l'une des revendications 8 à 10,
**caractérisé en ce que** :
l'actionneur à solénoïde (9) est monté, de manière pivotante, sur une poutre de support fixe (19).

12. Appareil à soupape selon revendication 11,
**caractérisé en ce que** :
la poutre de support (19) est fixée sur le corps de siège de soupape (2) par des barres de montage (20).

13. Appareil à soupape selon l'une des revendications 8 à 12,
**caractérisé en ce que** :
le corps de registre (4) est fixé sur une traverse (21) guidée de manière mobile.

14. Appareil à soupape selon revendication 13, lorsqu'elle dépend de la revendication 12,
**caractérisé en ce que** :
la traverse (21) est guidée, de manière mobile, par les barres de montage (20) pour monter la poutre de support (19).

15. Appareil à soupape selon l'une des revendications 8 à 14,
**caractérisé en ce que** :
le corps de registre (4) est sollicité par rapport au corps de siège de soupape (2) vers la configuration ouverte ou vers la configuration fermée.

16. Appareil à soupape selon revendication 15, lorsqu'elle dépend de l'une des revendications 11 ou 12 et lorsqu'elle dépend également de l'une des revendications 13 ou 14,
**caractérisé en ce que** :
des ressorts (22) sont montés sur les barres de montage (20) pour pousser la traverse (21) vers la poutre de support (19) ou pour pousser la traverse (21) vers le corps de siège de soupape (2) effectuant ainsi la sollicitation.

17. Appareil à soupape selon l'une des revendications 13 à 16, lorsqu'elle dépend de la revendication 11 et également lorsqu'elle dépend de l'une des revendications 9 et 10,
**caractérisé en ce que** :
le premier levier (14) est raccordé, de manière rotative, avec la poutre de support (19) par un joint de poutre (23) et le second levier (15) est raccordé, de manière rotative, avec la traverse (21) par un joint de traverse (24).
